# EUROPÄISCHE PATENTSCHRIFT

(11) **EP 1 813 369 B1**
(45) Veröffentlichungstag und Bekanntmachung des Hinweises auf die Patenterteilung: **06.01.2010**
(21) Anmeldenummer: 06024564.4
(22) Anmeldetag: 28.11.2006
(51) Int. Cl.: B23B 31/00, B23Q 1/00

(54) **Werkzeughalter und Werkzeugmaschine mit Arbeitsspindel und Werkzeughalter**
Tool holder and machine tool with a working spindle and a tool holder
Porte-outil et machine outil avec une broche de travail et un porte-outil

(30) Priorität: 31.01.2006 DE 102006005665
(43) Veröffentlichungstag der Anmeldung: 01.08.2007
(73) Patentinhaber: bielomatik Leuze GmbH + Co. KG, 72639 Neuffen (DE)
(72) Erfinder: Keppler, Jürgen, 72793 Pfullingen (DE)
(74) Vertreter: Thul, Hermann

(56) Entgegenhaltungen:
- EP-A2- 1 072 356
- DE-A1- 10 312 743

## Beschreibung

Die Erfindung betrifft einen Werkzeughalter zur Ankopplung eines Werkzeugs an eine Arbeitsspindel einer Werkzeugmaschine, mit einem Futterkörper, dem in jeweils voneinander abgewandten, endseitigen Bereichen eine Kupplungsstruktur für eine automatisierte Ankopplung an die Arbeitsspindel und eine Werkzeugaufnahme zur Festlegung des Werkzeugs zugeordnet sind, wobei zwischen den endseitigen Bereichen eine längs einer Mittelachse erstreckte Fluidleitung vorgesehen ist, die für eine Weiterleitung zumindest eines Fluids von der Kupplungsstruktur in Richtung des Werkzeugs gestaltet ist und die eine stromabwärts im Bereich der Werkzeugaufnahme angeordnete, längs der Mittelachse verstellbare, Adapterhülse aufweist, die für eine Längenanpassung der Fluidleitung an unterschiedliche Positionen des Werkzeugs in der Werkzeugaufnahme vorgesehen ist und die zumindest eine Schlüsselfläche zur Einleitung einer Verstellkraft aufweist, sowie eine Werkzeugmaschine mit einer Arbeitsspindel und einem Werkzeughalter.

Ein Werkzeughalter zur Ankopplung eines Werkzeugs an eine Arbeitsspindel einer Werkzeugmaschine ist bekannt. Der Werkzeughalter weist einen Futterkörper auf, der als Adapter zwischen einem Werkzeug, insbesondere einem Schneidwerkzeug wie einem Fräser oder einem Bohrer, und einer Arbeitsspindel einer Werkzeugmaschine vorgesehen ist und der für eine automatisierte Ankopplung und Abkopplung des Werkzeughalters an die Arbeitsspindel gestaltet ist. Für die automatisierte An- und Abkopplung ist der Futterkörper mit einer Kupplungsstruktur versehen, die vorzugsweise formschlüssig an der Arbeitsspindel verriegelt werden kann und die für die Übertragung von Kräften von der Arbeitsspindel auf das Werkzeug gestaltet ist. Die Kupplungsstruktur kann insbesondere als Hohlschaftkegel, bevorzugt nach DIN 69893, ausgeführt sein.

Eine am bekannten Futterkörper vorgesehene Werkzeugaufnahme ist als zylindrische Bohrung ausgeführt, die gegenüber einem zylindrischen Schaft des aufzunehmenden Werkzeugs einen geringfügig verringerten Durchmesser aufweist, so dass eine Übermaßpassung zwischen Werkzeugaufnahme und dem Schaft des Werkzeugs vorliegt. Das Werkzeug wird mittels eines vorzugsweise thermischen Spannprozesses nahezu kraftfrei in die Werkzeugaufnahme eingesetzt bzw. aus der Werkzeugaufnahme entnommen. In gleicher Weise können auch andere übliche Spannarten vorgesehen werden.

Um eine Schmierstoffversorgung, insbesondere in der Art einer Minimalmengenschmierung, des typischerweise mit endseitig angeordneten Schneiden in der Art eines Bohrers oder Fräsers versehenen Werkzeugs zu gewährleisten, ist zwischen der Kupplungsstruktur und der Werkzeugaufnahme eine Fluidleitung vorgesehen, die zur Weiterleitung eines Aerosols, also eines Gemisches aus Druckluft und einem Schmiermittel, bestimmt ist. Das Aerosol tritt im Bereich der Werkzeugaufnahme durch eine Adapterhülse, die für eine Längenanpassung der Fluidleitung vorgesehen ist. Eine Längenanpassung der Fluidleitung an die Position des Werkzeugs in der Werkzeugaufnahme wird zur Vermeidung von unerwünschten Querschnittsprüngen in einem Übergangsbereich zwischen der Fluidleitung und Kühlkanälen des Werkzeugs vorgenommen, um eine Anhaftung von Schmiermitteltröpfchen in der Fluidleitung zu vermeiden. Daher kann die Adapterhülse nach Einbringen des Werkzeugs in die Werkzeugaufnahme an das Werkzeug angenähert werden. Nach Passieren der Adapterhülse tritt das Aerosol in einen oder mehrere im Werkzeug vorgesehene Kühlkanäle ein, die eine Weiterleitung des Aerosols bis zu den Schneiden des Werkzeugs gewährleisten.

Um eine Verstellung der Adapterhülse längs einer Mittelachse des Futterkörpers zu ermöglichen, ist die Adapterhülse mit nach innen gerichteten Schlüsselflächen in der Art eines Innensechskants versehen. Um Querschnittssprünge in der Fluidleitung zu vermeiden, ist diese im Bereich der Adapterhülse als Fluidrohr ausgeführt, wobei ein Außendurchmesser des Fluidrohrs nur geringfügig von einem Inkreis der Schlüsselflächen abweicht, so dass sich das Fluidrohr an die Schlüsselflächen der Adapterhülse anschmiegt. Um eine Verstellung der Adapterhülse nach Einsetzen des Werkzeugs in die Werkzeugaufnahme vorzunehmen, ist bei dem bekannten Werkzeughalter vorgesehen, das Fluidrohr aus dem Werkzeughalter zu entnehmen, so dass die Schlüsselflächen der Adapterhülse freigelegt werden. Dann kann mittels eines Einstellwerkzeugs, beispielsweise eines Innensechskantschlüssels eine Verstellkraft auf Schlüsselflächen der Adapterhülse ausgeübt werden, um mittels einer Schraubbewegung die gewünschte Verstellung der Adapterhülse in Richtung des Werkzeugs und somit die gewünschte Längenanpassung der Fluidleitung zu bewirken. Anschließend kann das Fluidrohr wieder in den Werkzeughalter eingesetzt werden und das Werkzeug steht für die Ankopplung an die Arbeitsspindel der Werkzeugmaschine bereit.

Eine Längenanpassung der Fluidleitung ist insbesondere dann notwendig, wenn das Werkzeug nach einem Nachschärfen der Schneiden mit einer veränderten Position in der Werkzeugaufnahme aufgenommen wird. Die veränderte Position kann sich durch eine Verkürzung des Werkzeugs beim Nachschärfvorgang ergeben, wenn beispielsweise ein Abstand zwischen der Kupplungsstruktur und einer Werkzeugvorderkante konstant gehalten werden soll.

Ein Werkzeughalter mit den gattungsbildenden Merkmalen des Patentanspruchs 1 ist aus dem Dokument DE 103 12 743 A1 bekannt. Der Werkzeughalter weist eine als Stellschraube bezeichnete Adapterhülse auf, die einen Eingriff für ein Stellwerkzeug enthält. Da der Querschnitt des Eingriffs größer ist als der Querschnitt der Fluidleitung, die durch die Stellschraube führt, ist eine Verstellung der Adapterhülse nur an deren stromaufwärtigen Ende möglich. Es ist nicht möglich, ein Verstellwerkzeug durch die Fluidleitung zu führen. Das Fluidrohr muss am stromaufwärtigen Ende außen über die Adapterhülse geführt werden.

Die Aufgabe der Erfindung besteht darin, einen Werkzeughalter und eine Werkzeugmaschine zu schaffen, die eine verbesserte Anpassung der Fluidleitung an unterschiedliche Werkzeugpositionen ermöglichen.

Diese Aufgabe wird gemäß einem ersten Aspekt der Erfindung durch einen Werkzeughalter der eingangs genannten Art gelöst, bei dem ein Minimalquerschnitt der Fluidleitung zumindest im Wesentlichen durch die zumindest eine Schlüsselfläche der Adapterhülse bestimmt ist, so dass eine Verstellung der Adapterhülse durch die Fluidleitung hindurch bei eingesetztem Werkzeug möglich ist. Ein Querschnitt der Fluidleitung wird in einer orthogonal zur Mittelachse des Futterkörpers ausgerichteten Querschnittsebene ermittelt und beschreibt einen Flächenbereich, der für den Strömungsvorgang des Aerosols senkrecht zu einer Strömungsrichtung des Aerosols zur Verfügung steht. Um einen unerwünschten Niederschlag des Aerosols im Bereich der Fluidleitung zu vermeiden, ist für die Fluidleitung ein enger Querschnitt vorgesehen, der eine hohe Strömungsgeschwindigkeit und somit einen geringen Niederschlag des Aerosols in der Fluidleitung gewährleistet. Die zumindest eine Schlüsselfläche begrenzt einen Minimalquerschnitt der Fluidleitung, das heißt, dass der Flächenbereich in der Querschnittsebene, die die Schlüsselfläche schneidet, minimal gegenüber den anderen Flächenbereichen der Fluidleitung ist. Damit kann gewährleistet werden, dass eine Verstellung der Adapterhülse trotz eines bereits eingesetzten Werkzeugs und ohne eine Entfernung von Teilen der Fluidleitung, insbesondere des Fluidrohrs, möglich ist. Dies wird erreicht, indem das auf den Minimalquerschnitt der Fluidleitung abgestimmte Verstellmittel von dem mit der Kupplungsstruktur versehenen Endbereich des Futterkörpers durch die Fluidleitung hindurch, insbesondere durch das Fluidrohr, geführt wird und eine vorzugsweise formschlüssige, kraftübertragende Verbindung mit der zumindest einen Schlüsselfläche der Adapterhülse eingeht.

In Ausgestaltung der Erfindung ist vorgesehen, dass eine teleskopierbare Überlappung der Adapterhülse mit der Fluidleitung derart gestaltet ist, dass ein Verstellweg für die Adapterhülse zumindest einem Durchmesser der Werkzeugaufnahme, bevorzugt einem zumindest einem 1,2-fachen des Durchmessers der Werkzeugaufnahme entspricht. Besonders vorteilhaft beträgt der Verstellweg 10 mm. Eine teleskopierbare Überlappung zwischen der Adapterhülse und der Fluidleitung kann durch eine Steckverbindung zwischen einem hohlzylindrischen Abschnitt der Adapterhülse und dem Fluidrohr vorgesehen sein. Die Geometrien der Adapterhülse und des Fluidrohrs sind dabei derart aufeinander abgestimmt, dass eine im normalen Betrieb fluiddichte, längs einer Mittelachse des Futterkörpers schiebebewegliche Steckverbindung verwirklicht ist. Dabei ist eine maximale Einstecktiefe zwischen Adapterhülse und Fluidrohr so gewählt, dass ein Verstellweg, also ein Schiebebewegungsbereich zwischen Adapterhülse und Fluidrohr, vorzugsweise zumindest dem Durchmesser der Werkzeugaufnahme entspricht.

In weiterer Ausgestaltung der Erfindung ist vorgesehen, dass ein mittlerer Querschnitt der Fluidleitung maximal 20 mal größer, bevorzugt maximal 10 mal größer, besonders bevorzugt maximal 5 mal größer als ein im Werkzeug vorgesehener, mittlerer Kühlkanalquerschnitt ist. Damit kann eine vorteilhafte Strömungsgeschwindigkeit des Öl-/Luftgemisches in der Fluidleitung sowie in dem zumindest einen Kühlkanal des Werkzeugs sichergestellt werden. Der mittlere Querschnitt kann durch eine Mittelwertbildung aller in der Fluidleitung bzw. im Kühlkanal auftretenden Querschnitte unter Einbeziehung der jeweiligen Länge der Fluidleitung bzw. des Kühlkanals, die den gleichen Querschnitt aufweisen, ermittelt werden.

Eine Weiterbildung der Erfindung weist der Werkzeughalter eine Kupplungshülse zur Verbindung der Fluidleitung des Werkzeughalters mit einem Fluidkanal der Arbeitsspindel sowie ein Fluidrohr zur Verbindung der Kupplungshülse mit der Adapterhülse auf, wobei das Fluidrohr mit der Kupplungshülse mittels eines flexiblen Verbindungsmittels verbunden ist. Die Kupplungshülse dient der Aufnahme in einem Fluidkanal der Arbeitsspindel. Um auch bei schnellen Werkzeugwechselvorgängen ein problemloses Einführen der Kupplungshülse in diesen Fluidkanal zu gewährleisten, muss die Kupplungshülse in begrenztem Umfang auslenkbar sind, mindestens in etwa um 1,5°. Durch die Verbindung des Fluidrohrs mit der Kupplungshülse über ein flexibles Verbindungsmittel, welches in der Art eines Gelenks wirkt, wird diese Auslenkbarkeit nicht behindert. Dies ist insbesondere bei Ausgestaltungen des Fluidrohrs aus einem wenig elastischen Material wie einem Metall von Vorteil.

In einer darauf aufbauenden Weiterbildung ist das Verbindungsmittel zwischen einem Außendurchmesser des Fluidrohrs und einem Innendurchmesser der Kupplungshülse angeordnet, wobei das Verbindungsmittel vorzugsweise als elastisches Zwischenelement, insbesondere als O-Ring, ausgebildet ist. Diese Gestaltung ist besonders kostengünstig und einfach zu realisieren. Das Fluidrohr ist zu diesem Zweck vorzugsweise mit Mitteln zur formschlüssigen Aufnahme des O-Rings oder eines anderen Zwischenelements versehen. Im einfachsten Fall handelt es sich hierbei um eine umlaufende Nut. Das Zwischenelement kann jedoch auch unmittelbar auf das Fluidrohr oder eine innere Oberfläche der Kupplungshülse aufgebracht, insbesondere aufvulkanisiert, sein.

Gemäß einem zweiten Aspekt der Erfindung ist eine Werkzeugmaschine mit einer Arbeitsspindel und einem Werkzeughalter nach einem der Ansprüche 1 bis 3 vorgesehen. Die Arbeitsspindel weist einen rohrförmigen Schaft mit einer endseitigen Kupplungseinrichtung für eine Übertragung von Kräften und Bewegungen auf den Werkzeughalter auf, wobei die Kupplungseinrichtung eine kegelstumpfabschnittsförmige Aufnahmeöffnung, eine formschlüssig mit dem Werkzeughalter verriegelbare Spannzange und eine zur Ansteuerung der Spannzange vorgesehene Spannbuchse aufweist, die zumindest zwei separate, insbesondere konzentrisch zueinander angeordnete, Fluidkanäle zur Weiterleitung von Fluiden in Richtung des Werkzeughalters aufweist. Die beiden Fluidkanäle sind für eine getrennte Förderung zweier unterschiedlicher Fluide, insbesondere eines Schmiermittels und Druckluft, vorgesehen und können konzentrisch in der Art einer im Wesentlichen zylindrischen Bohrung für die Druckluft und einer konzentrisch in der Bohrung angeordneten rohrförmigen Lanze für das Schmiermittel vorgesehen sein. Die Lanze für das Schmiermittel kann im Bereich der Kupplungseinrichtung der Arbeitsspindel mit einer Düsenöffnung versehen sein, so dass eine Durchmischung der Fluide im Bereich der Kupplungseinrichtung vorgesehen ist. Damit finden die Durchmischung der Fluide und die Bildung des Öl-/Luftgemisches unmittelbar im Werkzeughalter statt, so dass das Öl-/Luftgemisch nur einen kurzen Weg bis zu den Kühlkanälen im Werkzeug zurücklegen muss. Durch die getrennte Führung der zumindest zwei Fluide bis zum Ende der Arbeitsspindel und durch die Bildung des ÖI-/Luftgemisches im Kupplungsbereich wird eine aufwendige Ankopplung von separaten, im Werkzeughalter weiterführenden, separaten Fluidkanälen vermieden, die sich ungünstig in den Herstellungskosten für den Werkzeughalter niederschlagen würden.

Weitere Vorteile und Merkmale der Erfindung ergeben sich aus den Ansprüchen sowie aus der nachfolgenden Beschreibung eines bevorzugten Ausführungsbeispiels, das anhand der Zeichnung dargestellt ist. Die einzige Zeichnung zeigt:
- Fig. 1: eine schematische Schnittdarstellung einer ersten Ausführungsform eines erfindungsgemäßen Werkzeughalters mit verstellbarer Adapterhülse in formschlüssiger Ankopplung an eine Spannzange einer nicht näher dargestellten Arbeitsspindel einer Werkzeugmaschine und
- Fig. 2: eine schematische Schnittdarstellung einer zweiten Ausführungsform eines erfindungsgemäßen Werkzeughalters.

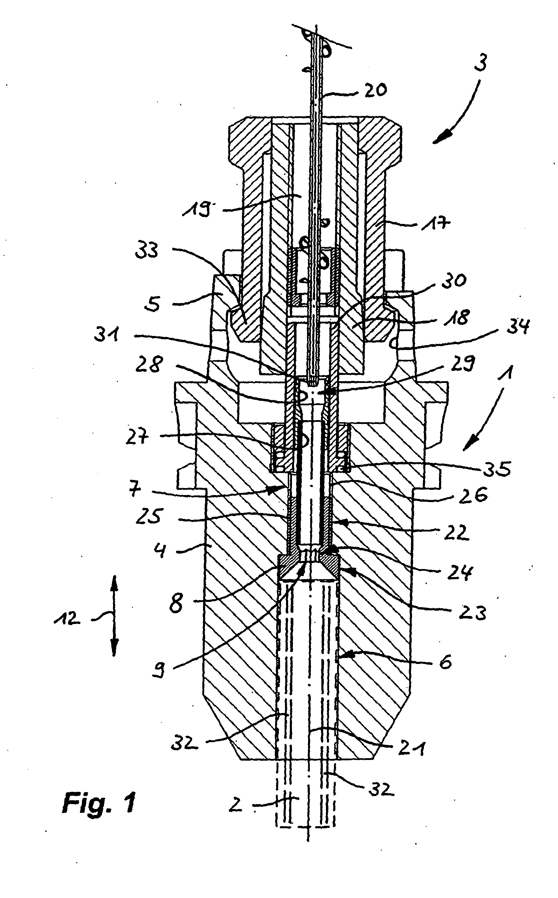

Der in Fig. 1 dargestellte Werkzeughalter 1 ist für eine Ankopplung eines gestrichelt angedeuteten, zylindrisch gestalteten Werkzeugs 2 an eine bereichsweise dargestellte Arbeitsspindel 3 einer nicht dargestellten Werkzeugmaschine vorgesehen. Der Werkzeughalter 1 weist einen Futterkörper 4 auf, der im Wesentlichen rotationssymmetrisch zu einer Mittelachse 21 ausgeführt ist und der mit einer durchgehenden Bohrung versehen ist, die abschnittsweise unterschiedliche Funktionsbereiche, beispielsweise zur Aufnahme eines Werkzeugs 2 oder zur Aufnahme einer Kupplungshülse 30, aufweist.

In einem ersten Endbereich ist an dem Futterkörper 4 eine als Hohlschaftkegel ausgeführte Kupplungsstruktur 5 für eine automatisierte Ankopplung an die Arbeitsspindel 3 vorgesehen. Die Arbeitsspindel 3 weist zu diesem Zweck eine Spannbuchse 18 und eine mit radial nach außen weisenden Riegelhaken 33 versehene Spannzange 17 auf, die durch eine translatorische Relativbewegung der Spannbuchse 18 gegen eine Riegelnut 34 der Kupplungsstruktur 5 gepresst und somit formschlüssig verriegelt werden kann. In einem zweiten Endbereich ist die Bohrung im Futterkörper 4 als Werkzeugaufnahme 6 zur Festlegung des Werkzeugs 2 gestaltet und für einen thermischen Ein- bzw. Ausspannvorgang vorgesehen. Zwischen den endseitigen Bereichen ist die Bohrung mit einer längs der Mittelachse 21 erstreckten Fluidleitung 7 versehen. Die Fluidleitung 7 ist für eine Weiterleitung zumindest eines Fluids von der Kupplungsstruktur 5 in Richtung des Werkzeugs 2 gestaltet.

Die Fluidleitung 7 ist im Bereich der Kupplungsstruktur 5 als Kupplungshülse 30 mit kreisförmigem Querschnitt verwirklicht und dient zur abdichtenden Ankopplung an die Spannbuchse 18. In der Spannbuchse 18 ist eine Druckluftbohrung 19 sowie eine konzentrisch in der Druckluftbohrung 19 angeordnete, rohrförmige Lanze 20 zum Transport eines flüssigen Schmiermittels vorgesehen. Die Kupplungshülse 30 kann in die Druckluftbohrung 19 eingesteckt werden und bildet somit eine Weiterführung der Druckluftbohrung 19 in den Werkzeughalter 1. Um kleinere Lageabweichungen beim Ankoppeln des Werkzeughalters 1 an die Arbeitsspindel 3 auszugleichen, sind zwei O-Ringe 35 zwischen der Kupplungshülse 30 und dem Futterkörper 4 des Werkzeughalters 1 vorgesehen. Sie ermöglichen in begrenztem Umfang eine Auslenkung der Kupplungshülse 30 von ihrer Sollposition, die in Fig. 1 dargestellt ist. Die maximale Auslenkung beträgt etwa 1,5° gegenüber der Mittelachse 21. Die Lanze 20 ragt bei angekoppeltem Werkzeughalter 1 bis in eine der Fluidleitung zugehörige Fluidbuchse 28, die einen gegenüber der Kupplungshülse 30 reduzierten Querschnitt aufweist und die als Mischkammer 29 für die in der Druckluftbohrung 19 strömende Druckluft und das in der Lanze 20 transportierte Schmiermittel dient. In der Mischkammer 29 wird das aus einer Dosieröffnung 31 der Lanze 20 austretende Schmiermittel, vorliegend Öl, durch die Druckluft vernebelt und bildet dadurch ein ÖI-/Luftgemisch, das durch die Fluidleitung 7 in Richtung des Werkzeugs 2 gefördert wird. An die Fluidbuchse 28 grenzt ein Fluidrohr 27 an, das einen kreisförmigen, über die gesamte Länge des Fluidrohrs 27 konstanten Querschnitt aufweist.

Stromabwärts in Richtung des Werkzeugs 2 ist im Bereich der Werkzeugaufnahme 6 angrenzend an das Fluidrohr 27 eine längs der Mittelachse verstellbare Adapterhülse 8 vorgesehen, die eine Längenanpassung der Fluidleitung 7 an unterschiedliche Positionen des Werkzeugs 2 ermöglicht. Die Adapterhülse 8 weist einen Hülsenabschnitt 22 auf, der in der Art eines Hohlzylinders gestaltet ist und der an einer Außenfläche mit einem Außengewinde 25 versehen ist, das in ein Innengewinde 26 des Futterkörpers 4 eingreift und das eine translatorische Verstellung der Adapterhülse 8 längs der Mittelachse 21 mittels einer Rotationsbewegung ermöglicht. Ein Innendurchmesser des Hülsenabschnitts 22 ist auf das Fluidrohr 27 angepasst, so dass eine teleskopierbare, vorzugsweise abdichtende Steckverbindung zwischen dem Hülsenabschnitt 22 und dem Fluidrohr 27 verwirklicht ist.

Das Fluidrohr 27 ragt in die Adapterhülse 8 hinein und endet in der in Fig. 1 dargestellten Position der Adapterhülse unmittelbar vor einem durch Schlüsselflächen 9 begrenzten Minimalquerschnitt der Adapterhülse 8. Die Schlüsselflächen 9 sind in der Art eines Innensechskants angeordnet, wobei ein Umkreis um die Schlüsselflächen 9 ungefähr dem kreisförmigen Querschnitt des Fluidrohrs 27 entspricht. Ein Inkreis, also ein die Schlüsselflächen 9 innen tangierender Kreis, ist zumindest geringfügig kleiner als der kreisförmige Querschnitt des Fluidrohrs 27. Damit kann ein nicht dargestelltes Verstellmittel, insbesondere ein Innensechskantschlüssel, von dem mit der Kupplungsstruktur 5 versehenen Endbereich des Futterkörpers 4 durch die Fluidleitung 7 hindurch, insbesondere durch das Fluidrohr 27, geführt werden und kann eine formschlüssige, kraftübertragende Verbindung mit den Schlüsselflächen 9 eingehen, um eine Verstellung der Adapterhülse 8 zu bewirken.

Der durch die Schlüsselflächen 9 begrenzte, auch als Sechskantabschnitt 24 bezeichnete Minimalquerschnitt der Fluidleitung 7 geht beim dargestellten Ausführungsbeispiel in einen Kegelabschnitt 23 über, der eine Überführung der Fluidleitung 7 in die Werkzeugaufnahme 6 gewährleistet. Das Werkzeug 2 weist zwei parallel verlaufende Kühlkanäle 32 auf, die als durchgehende Bohrungen verwirklicht sind. Der Minimalquerschnitt der Fluidleitung im Bereich des Sechskantabschnitts 24 beträgt beim dargestellten Ausführungsbeispiel ungefähr das Achtfache eines Querschnitts der beiden Kühlkanäle 32.

Ein Verstellweg 12 der Adapterhülse 8 beträgt für den vorliegenden Werkzeughalter bei einem Durchmesser der Werkzeugaufnahme 6 von 8mm zumindest 10mm, so dass eine typische Verkürzung des Werkzeugs 2 durch Nachschleifen der Schneiden und bei konstantem Abstand zwischen der Kupplungsstruktur 5 und der Spitze des Werkzeugs 2 durch Nachstellen der Adapterhülse 8 ausgeglichen werden kann.

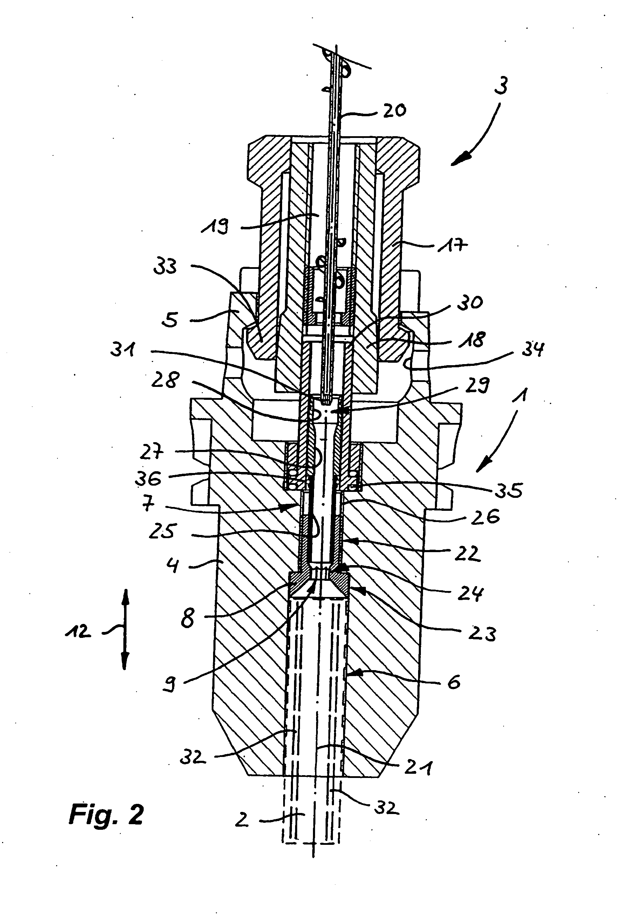

Fig. 2 zeigt eine zweite Ausführungsform, die gegenüber der ersten Ausführungsform der Fig. 1 in Hinblick auf den Bereich der Kupplungshülse 30, der Fluidbuchse 28 und des Fluidrohrs 27 modifiziert ist. Die bei diesem zweiten Ausführungsbeispiel verwendeten Bezugsziffern entsprechen den Bezugsziffern jeweils vergleichbarer Bauteile des ersten Ausführungsbeispiels der Fig. 1.

Abweichend von dem Ausführungsbeispiel der Fig. 1 bilden bei diesem zweiten Ausführungsbeispiel die Kupplungshülse 30 und das Fluidrohr 27 keine starre Einheit. Stattdessen ist zwischen dem innenliegenden Fluidrohr 27 und der außenliegenden Kupplungshülse 30 ein O-Ring 36 vorgesehen, der gleichsam ein Gelenk bildet, welches eine Relativschwenkbewegung zwischen dem Fluidrohr 27 und der Kupplungshülse 30 ermöglicht. Die im Zusammenhang mit der ersten Ausführungsform der Fig. 1 beschriebene Auslenkung der Kupplungshülse 30 um maximal 1,5°, um eine Lageungenauigkeit auszugleichen, wird aufgrund dieses Gelenks von dem Fluidrohr 27 nicht behindert, selbst wenn dieses nicht elastisch verformbar ausgebildet ist. Es kann dementsprechend starr, vorzugsweise metallisch, ausgebildet sein. Das innenliegende Fluidrohr 27 und der außenliegende Futterkörper 4 verbleiben demnach in einer festen Lage zueinander, während die Kupplungshülse 30, die am Fluidrohr 27 und am Futterkörper 4 durch die O-Ringe 35, 36 beweglich gelagert ist, zum Ausgleich von Lageungenauigkeiten auslenkbar ist.

## Patentansprüche

1. Werkzeughalter (1) zur Ankopplung eines Werkzeugs (2) an eine Arbeitsspindel (3) einer Werkzeugmaschine,
mit einem Futterkörper (4),
• dem in jeweils voneinander abgewandten, endseitigen Bereichen eine Kupplungsstruktur (5) für eine automatisierte Ankopplung an die Arbeitsspindel (3) und eine Werkzeugaufnahme (6) zur Festlegung des Werkzeugs (2) zugeordnet sind,
• wobei zwischen den endseitigen Bereichen eine längs einer Mittelachse (21) erstreckte Fluidleitung (7) vorgesehen ist, die
o für eine Weiterleitung zumindest eines Fluids von der Kupplungsstruktur (5) in Richtung des Werkzeugs (2) gestaltet ist und
o ein Fluidrohr (27), sowie
o eine stromabwärts an das Fluidrohr (27) angrenzende und im Bereich der Werkzeugaufnahme (6) angeordnete, längs der Mittelachse (21) verstellbare Adapterhülse (8) aufweist,
■ die für eine Längenanpassung der Fluidleitung (7) an unterschiedliche Positionen des Werkzeugs (2) in der Werkzeugaufnahme (6) vorgesehen ist und
■ die zumindest eine nach innen gerichtete Schlüsselfläche (9) zur Einleitung einer Verstellkraft für die Verstellung aufweist,
**dadurch gekennzeichnet, dass**
die Fluidleitung (7) mit Fluidrohr (27) und Adapterhülse (8) so gestaltet ist, dass der minimale Querschnitt der Fluidleitung (7) in der Querschnittsebene, die die Schlüsselfläche (9) schneidet, minimal gegenüber den anderen Querschnitten der Fluidleitung (7) ist, wobei der Querschnitt der Fluidleitung (7) in einer orthogonal zur Mittelachse (21) des Futterkörpers (4) ausgerichteten Querschnittsebene ermittelt wird, und dass der durch die Schlüsselfläche (9) begrenzte Minimalquerschnitt der Fluidleitung (7) in einen Abschnitt übergeht, der eine Überführung der Fluidleitung (7) in die Werkzeugaufnahme gewährleistet, so dass eine Verstellung der Adapterhülse (8) durch die Fluidleitung (7) hindurch bei eingesetztem Werkzeug (2) möglich ist.

2. Werkzeughalter (1) nach Anspruch 1,
**dadurch gekennzeichnet, dass**
eine teleskopierbare Überlappung der Adapterhülse (8) mit der Fluidleitung (7) derart gestaltet ist, dass ein Verstellweg für die Adapterhülse (8) zumindest einem Durchmesser der Werkzeugaufnahme (6), bevorzugt einem zumindest einem 1,2-fachen des Durchmessers der Werkzeugaufnahme (6) entspricht.

3. Werkzeughalter (1) nach Anspruch 1 oder 2,
**dadurch gekennzeichnet, dass**
ein mittlerer Querschnitt der Fluidleitung (7) maximal 20 mal größer, bevorzugt maximal 10 mal größer, besonders bevorzugt maximal 5 mal größer, als ein im Werkzeug (2) vorgesehener, mittlerer Kühlkanalquerschnitt ist.

4. Werkzeughalter (1) nach einem der vorstehenden Ansprüche,
**gekennzeichnet durch**
eine Kupplüngshülse (30) zur Verbindung der Fluidleitung (7) des Werkzeughalters (1) mit einem Fluidkanal der Arbeitsspindel (3) sowie **durch** ein Fluidrohr (27) zur Verbindung der Kupplungshülse (30) mit der Adapterhülse (8), wobei das Fluidrohr mit der Kupplungshülse (30) mittels eines flexiblen Verbindungsmittels (36) verbunden ist.

5. Werkzeughalter (1) nach Anspruch 4,
**dadurch gekennzeichnet, dass**
das Verbindungsmittel zwischen einem Außendurchmesser des Fluidrohrs (27) und einem Innendurchmesser der Kupplungshülse (30) angeordnet ist, wobei das Verbindungsmittel vorzugsweise als elastisches Zwischenelement (36), insbesondere als O-Ring (36), ausgebildet ist.

6. Werkzeugmaschine mit einer Arbeitsspindel (3), die einen rohrförmigen Schaft mit einer endseitigen Kupplungseinrichtung (17, 18) für eine Übertragung von Kräften und Bewegungen auf den Werkzeughalter (1) aufweist, wobei die Kupplungseinrichtung (17, 18) eine kegelstumpfabschnittsförmige Aufnahmeöffnung, eine formschlüssig mit dem Werkzeughalter verriegelbare Spannzange (17) und eine zur Ansteuerung der Spannzange (17) vorgesehene Spannbuchse (18) aufweist, die zumindest zwei separate, insbesondere konzentrisch zueinander angeordnete, Fluidkanäle (19, 20)
zur Weiterleitung von Fluiden in Richtung des Werkzeughalters (1) aufweist, und einem automatisiert wechselbaren, an der Arbeitsspindel (3) anbringbaren Werkzeughalter (1) nach einem der vorhergehenden Ansprüche.

## Claims

1. Tool holder (1) for coupling a tool (2) to a work spindle (3) of a machine tool,
comprising a chuck body (4),
• to which there are assigned, in respectively mutually averted end regions, a coupling structure (5) for automated coupling to the work spindle (3) and a tool-holding fixture (6) for securement of the tool (2),
• wherein a fluid line (7) extended along a centre axis (21) is provided between the end regions, which fluid line
o is configured to relay at least one fluid from the coupling structure (5) in the direction of the tool (2) and
o has a fluid tube (27), as well as
o an adapter sleeve (8), which adjoins the fluid tube (27) downstream thereof and is disposed in the region of the tool-holding fixture (6) and is adjustable along the centre axis (21),
■ the said adapter sleeve being designed for a length adjustment of the fluid line (7) to different positions of the tool (2) in the tool-holding fixture (6) and
■ having at least one inwardly directed key face (9) for the transmission of an adjusting force for the adjustment,
**characterized in that**
the fluid line (7) with fluid tube (27) and adapter sleeve (8) is configured such that the minimum cross section of the fluid line in the cross-sectional plane intersecting the key face (9) is minimal in relation to the other cross sections of the fluid line (7), the cross section of the fluid line (7) being determined in a cross sectional plane aligned at right angles to the centre axis (21) of the chuck body (4), and **in that** the minimum cross section of the fluid line (7), which is delimited by the key face (9), merges into a portion that ensuers a transfer of the fluid line (7) into the tool-holding fixture, so that an adjustment of the adapter sleeve (8) through the fluid line (7) is possible with the tool (2) inserted.

2. Tool holder (1) according to Claim 1,
**characterized in that**
a telescopic overlap of the adapter sleeve (8) with the fluid line (7) is configured such that an adjustment travel for the adapter sleeve (8) corresponds at least to a diameter of the tool-holding fixture (6), preferably to at least 1.2 times the diameter of the tool-holding fixture (6).

3. Tool holder (1) according to Claim 1 or 2,
**characterized in that**
a mean cross section of the fluid line (7) is maximally 20 times larger, preferably maximally 10 times larger, particularly preferably maximally 5 times larger than a mean cooling channel cross section provided in the tool (2).

4. Tool holder (1) according to one of the preceding claims,
**characterized by**
a coupling sleeve (30) for connecting the fluid line (7) of the tool holder (1) to a fluid channel of the work spindle (3), as well as by a fluid tube (27) for connecting the coupling sleeve (30) to the adapter sleeve (8), the fluid tube being connected to the coupling sleeve (30) by means of a flexible connecting means (36).

5. Tool holder (1) according to Claim 4,
**characterized in that**
the connecting means is disposed between an outer diameter of the fluid tube (27) and an inner diameter of the coupling sleeve (30), the connecting means preferably being configured as an elastic intermediate element (36), in particular as an O-ring (36).

6. Machine tool comprising a work spindle (3) which has a tubular shank having an end coupling device (17, 18) for transmitting forces and motions to the tool holder (1), the coupling device (17, 18) having a frustoconical receiving opening, a collet chuck (17) positively lockable to the tool holder and a clamping bush (18) designed to actuate the collet chuck (17), which clamping bush has at least two separate, in particular concentrically arranged fluid channels (19, 20) for relaying fluids in the direction of the tool holder (1), and further comprising an automatedly changeable tool holder (1), attachable to the work spindle (3), according to one of the preceding claims.

## Revendications

1. Porte-outil (1) pour l'accouplement d'un outil (2) à une broche de travail (3) d'une machine-outil,
comprenant un corps de mandrin (4),
- auquel sont associés, à chaque fois dans des régions d'extrémité opposées l'une à l'autre, une structure d'accouplement (5) pour un accouplement automatisé à la broche de travail (3) et un logement d'outil (6) pour la fixation de l'outil (2),
- une conduite de fluide (7) s'étendant le long d'un axe médian (21) étant prévue entre les régions d'extrémité, laquelle
- est configurée pour conduire au moins un fluide de la structure d'accouplement (5) dans la direction de l'outil (2) et
- présente un tube de fluide (27), ainsi
- qu'un adaptateur à douille (8) disposé en aval et adjacent au tube de fluide (27) et dans la région du logement d'outil (6), déplaçable le long de l'axe médian (21),
- lequel est prévu pour adapter en longueur la conduite de fluide (7) à différentes positions de l'outil (2) dans le logement d'outil (6), et
- qui présente au moins un méplat (9) orienté vers l'intérieur pour introduire une force de déplacement pour le déplacement,
**caractérisé en ce que**
la conduite de fluide (7) avec le tube de fluide (27) et l'adaptateur à douille (8) est configurée de telle sorte que la section transversale minimale de la conduite de fluide (7) dans le plan de la section transversale, qui coupe le méplat (9), soit minimale par rapport aux autres sections transversales de la conduite de fluide (7), la section transversale de la conduite de fluide (7) étant déterminée dans un plan de section transversale orienté perpendiculairement à l'axe médian (21) du corps de mandrin (4), et **en ce que** la section transversale minimale de la conduite de fluide (7), limitée par le méplat (9), se prolonge par une portion qui permet un passage de la conduite de fluide (7) dans le logement d'outil de sorte qu'un déplacement de l'adaptateur à douille (8) à travers la conduite de fluide (7) soit possible lorsque l'outil (2) est inséré.

2. Porte-outil (1) selon la revendication 1,
**caractérisé en ce**
**qu'**un chevauchement télescopable de l'adaptateur à douille (8) avec la conduite de fluide (7) est configuré de telle sorte qu'une course de déplacement pour l'adaptateur à douille (8) corresponde au moins à un diamètre du logement d'outil (6), de préférence à 1,2 fois le diamètre du logement d'outil (6).

3. Porte-outil (1) selon la revendication 1 ou 2,
**caractérisé en ce**
**qu'**une section transversale moyenne de la conduite de fluide (7) est au maximum 20 fois plus grande, et de préférence au maximum 10 fois plus grande, et en particulier de préférence au maximum 5 fois plus grande qu'une section transversale d'un canal de refroidissement prévu sur l'outil (2).

4. Porte-outil (1) selon l'une quelconque des revendications précédentes,
**caractérisé par**
une douille d'accouplement (30) pour la connexion de la conduite de fluide (7) du porte-outil (1) à un canal de fluide de la broche de travail (3), ainsi que par un tube de fluide (27) pour la connexion de la douille d'accouplement (30) à l'adaptateur à douille (8), le tube de fluide étant connecté à la douille d'accouplement (30) au moyen d'un moyen de connexion flexible (36).

5. Porte-outil (1) selon la revendication 4,
**caractérisé en ce que**
le moyen de connexion est disposé entre un diamètre extérieur du tube de fluide (27) et un diamètre intérieur de la douille d'accouplement (30), le moyen de connexion étant réalisé de préférence sous forme d'élément intermédiaire élastique (36), notamment sous forme de joint torique (36) .

6. Machine-outil comprenant une broche de travail (3), qui présente un arbre tubulaire avec un dispositif d'accouplement (17, 18) à l'extrémité, pour un transfert de forces et de mouvements au porte-outil (1), le dispositif d'accouplement (17, 18) présentant une ouverture de réception en forme de section tronconique, une pince de serrage (17) verrouillable par engagement par correspondance géométrique avec le porte-outil, et un manchon de serrage (18) prévu pour commander la pince de serrage (17), qui présente au moins deux canaux de fluide (19, 20) séparés disposés notamment concentriquement l'un par rapport à l'autre, pour conduire des fluides dans la direction du porte-outil (1), et un porte-outil (1) selon l'une quelconque des revendications précédentes, pouvant être remplacé de manière automatique, et pouvant être monté sur la broche de travail (3).
